(19) **Europäisches Patentamt / European Patent Office / Office européen des brevets**

(11) **EP 3 079 499 B1**

(12) **EUROPEAN PATENT SPECIFICATION**

(45) Date of publication and mention of the grant of the patent:
**20.02.2019 Bulletin 2019/08**

(21) Application number: **14758382.7**

(22) Date of filing: **01.09.2014**

(51) Int Cl.:
**A23L 33/10** (2016.01)   **A23L 33/00** (2016.01)

(86) International application number:
**PCT/EP2014/068486**

(87) International publication number:
**WO 2015/086169 (18.06.2015 Gazette 2015/24)**

(54) **SYNTHETIC MILK COMPOSITIONS COMPRISING POLYUNSATURATED FATTY ACIDS (PUFAS) FOR PROMOTING THE HEALTHY ESTABLISHMENT OF COGNITIVE FUNCTION IN MALE AND FEMALE INFANT AND CHILDREN**

SYNTHETISCHE MILCHZUSAMMENSETZUNGEN MIT MEHRFACH UNGESÄTTIGTEN FETTSÄUREN (PUFA) ZUR FÖRDERUNG DER GESUNDEN AUSBILDUNG DER KOGNITIVEN FUNKTION MÄNNLICHER UND WEIBLICHER BABYS UND KLEINKINDER

COMPOSITIONS DE LAIT SYNTHÉTIQUE COMPRENANT DES ACIDES GRAS POLYINSATURÉS (PUFA) POUR FAVORISER L'ÉTABLISSEMENT SAIN DE LA FONCTION COGNITIVE CHEZ LE NOURRISSON MÂLE ET FEMELLE ET LES ENFANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2013 EP 13196785**

(43) Date of publication of application:
**19.10.2016 Bulletin 2016/42**

(73) Proprietor: **Nestec S.A.**
**1800 Vevey (CH)**

(72) Inventors:
• **DE CASTRO, Carlos Antonio**
  **1203 Geneva (CH)**
• **DESTAILLATS, Frederic**
  **1077 Servion (CH)**
• **GIUFFRIDA, Francesca**
  **1083 Mezieres (CH)**
• **THAKKAR, Sagar**
  **1817 Brent (CH)**
• **MUKHERJEE, Rajat**
  **1820 Montreux (CH)**

(74) Representative: **Corticchiato, Olivier**
  **Nestec S.A.**
  **Centre de Recherche Nestlé**
  **Vers-chez-les-Blanc**
  **Case Postale 44**
  **1000 Lausanne 26 (CH)**

(56) References cited:
**EP-A1- 2 258 216**       **WO-A1-2006/041316**
**WO-A1-2011/051482**    **WO-A1-2011/115476**
**WO-A2-01/78530**        **WO-A2-2007/073192**
**US-A1- 2008 003 330**

• **Martine S Alles ET AL: "Current trends in the composition of infant milk formulas", CURRENT PAEDIATRICS, vol. 14, no. 1, 1 February 2004 (2004-02-01), pages 51-63, XP55370152, GB ISSN: 0957-5839, DOI: 10.1016/j.cupe.2003.09.007**

## Description

## Technical Field

The invention concerns synthetic nutritional formulations, particularly milk based compositions, for infants and children. The compositions are especially adapted to the gender of the child. The invention further relates to administration of these compositions for promoting the healthy establishment of cognitive function in infant boys and girls or in young boys and girls.

## Background of the Invention

Nervous system development and maturation is a highly complex biological phenomenon that involves a number of physiological processes. The nervous system develops during gestation and then refines to a mature, functional network during the post natal period.

Immaturity or delayed maturation of the cerebral cortex may lead to delayed and/or impaired learning ability, loss of, or poor development of higher reasoning, concentration difficulties, delay in language development, memory and executive function problems, decreased intelligence, and thus, poor mental performance. Other disorders, such as mood disorders and disorders linked to the inability to communicate and socialize normally (for example, autism, including Asperger's syndrome), may also result.

This can be observed in infants such as:

- Preterm infants, low birth weight (<2500 g), very low and extremely low birth weight infants (<1500 g), and in small for gestational age infants [Allen, M.C. (2008); Neurodevelopmental outcomes of preterm infants, Curr. Opin Neurol., 21(2): 123-8].

- Premature or term-born infants having experienced an intrauterine growth retardation (IUGR) that occurred following any adverse events during the gestation (smoking of the mother, medication of the mother, low placenta quality, abnormal placenta positioning, malnutrition of the mother and the foetus, excessive stress/anxiety of the mother, etc); [Gregory, A. et al. (2008); Intrauterine Growth Restriction Affects the Preterm Infant's Hippocampus, Pediatric Research, 63(4): 438-443].

- Any neonate and young infant showing nervous system growth retardation following, for example, hypoxemia-ischemia at birth, or any other adverse event [Barrett, R.D. et al. (2007); Destruction and reconstruction: hypoxia and the developing brain, Birth Defects Res. C. Embryo Today, 81: 163-76].

It is known that nutrition plays an important role in neuronal maturation in the brain (reviewed in [Huppi, P.S. (2008); Nutrition for the Brain, Pediatric Research, 63(3): 229-231]). Specifically, clinical studies have shown that essential fatty acids are crucial to ensure foetal and postnatal brain development [Chang, C.Y. et al. (2009); Essential fatty acids and human brain, Acta Neurol. Taiwan, 18(4): 231-41]; [Alessandri, J.M. et al. (2004); Polyunsaturated fatty acids in the central nervous system: evolution of concepts and nutritional implications throughout life, Reprod. Nutr. Dev., 44(6): 509-38].

The consequences of malnutrition can be irreversible and may include poor cognitive development, educability, and thus future economic productivity [Horton, R; (2008) The Lancet, Vol. 371, Issue 9608, page 179; [Laus, M.F. et al. (2011); Early postnatal protein-calorie malnutrition and cognition: a review of human and animal studies, Int. J. Environ. Res. Public Health., 8(2): 590-612].

Thus, oral interventions are an appropriate way to positively impact on the development of the nervous system, so as to promote the healthy establishment of cognitive function and mental performance in infants or young children.

In general, human breast milk represents the uncontested gold standard in terms of infant nutrition. In particular, early breastfeeding and a higher protein intake have been shown beneficial to neuronal maturation in infants (reviewed in [Huppi, P.S. (2008)]. However, in some cases breastfeeding is inadequate or unsuccessful for medical reasons or because of mother choice not to breastfeed. Infant formulae have been developed for these situations.

One approach to designing infant formula has been to try to design formulae that resemble breast milk. However, the complexity of the composition of human milk, much about which is still unknown, makes this approach technically very challenging.

In humans during pregnancy, hormones such as estrogen, progesterone and prolactin lead to glandular proliferation and differentiation, which prepares the mammary glands for milk synthesis. After the birth, the primed mammary glands synthesize milk which is likely to vary according to genetic, environmental, behavioral, dietary and other physiological factors. More specifically, the maternal dietary influence on milk composition is varied and is nutrient specific.

To add to this complexity, human lactation is dynamic, occurring in stages of lactation, changing from early carbohydrate-rich diluted milk to lipid and protein enriched, energy-dense milk at later stages (after 30 days). In humans, early milk or colostrum (1 - 5 days) is known to be rich in immune factors and mature milk in energy density. Furthermore, Powe and associates [Powe C.E. et al. (2010); Infant sex predicts breast milk energy content, American journal of human biology, 22:50-54] have recently reported differences in energy content based on the gender of the new born infant. Milk secreted from the mothers of male infants was reported to be 25% greater in energy content when compared with the milk of mothers of female infants.

As well as depending on the maturity of lactation, it has been demonstrated that many nutrients in breast milk are dependent on the time of the day the milk is sampled (diurnal variations), whether only a part of feeding (pre-, mid-, or hind-milk) or whole breast milk was collected, whether left or the right breast was drained [Jensen RG., (1999), Lipids in Human Milk, Lipids 34, 1243-1271]. In terms of human milk characterization, whereas there are many reports in the prior art on the relative amounts of nutrients, including fatty acids and phospholipids (expressed as g per 100 g of phospholipids) in breast milk [Sala-Vila A., et al (2005), Lipid composition in human breast milk from Granada (Spain): Changes during lactation, Nutrition 21, 467-473], there is very little data on the absolute quantities (for example of phospholipids). Thus, the level of intake by the infant of the nutrients remains largely unknown.

WO 01/7853082 describes methods for providing nutrition and for enhancing neurological development of preterm infants.

EP 2 258 216 A1 describes a nutritional composition, in particular directed to toddlers and/or a weaning child, the nutritional composition comprising a protein source, a source of available carbohydrates, a lipid source, at least one probiotic microorganism, and prebiotics wherein the lipid source comprises DHA (docosahexanenoic acid).

Imen Haddad et al., European Food Research and Technology, 2012, Vol. 235, No. 2, pages 325-332 describes the stereospecific distribution of fatty acids across the triacylglycerol molecules in breast milk obtained at three different periods of lactation.

Genzel-Boroviczny et al., European Journal of Pediatrics, 1997, Vol. 156, pages 142-147 describes the fatty acid composition of human milk during the 1st month after term and preterm delivery.

Sala-Vila et al., Nutrition, 2005, Vol. 21., No. 4, pages 467-473 describes the lipid composition in human breast milk from Granada.

EP 2 258 218 A1 describes a nutritional composition, in particular directed to toddlers and/or a weaning child, the nutritional composition comprising a protein source, a source of available carbohydrates, a lipid source, at least one probiotic microorganism, and prebiotics, wherein the lipid source comprises DHA (docosahexaenoic acid).

WO 2006/041316 describes a process for producing dairy products having lower levels of neutral lipids and/or higher levels of polar lipids, by extraction using near critical carbon dioxide or dimethyl ether.

US 2008/0003330 A1 describes infant formulas comprising fat, protein, carbohydrate, vitamins, and minerals including on an as-fed basis, at least about 5 mg/L of gangliosides, at least about 150 mg/L of phospholipids, at least about 70 mg/L of total sialic acid with at least about 2.5 % of lipid-bound sialic acid, at least about 0.13% docosahexaenoic acid by weight of total fatty acids, and at least about 0.25% arachidonic acid by weight of total fatty acids.Given the complexity of breast milk composition, it remains very challenging to develop synthetic nutritional compositions based on breast milk composition.

There is a need to provide nutritional interventions that meet the nutritional needs of infants and young children. In particular, there is a need to provide nutritional interventions that are adapted to the distinct nutritional needs of male and female infants and young children.

There is a need to provide compositions that promote and support the healthy establishment of cognitive function, during the early phases of newborn life, when the nervous system is rapidly maturing.

The present inventors have designed synthetic nutritional compositions that are especially adapted to meet the needs of male and female infants and young children. The compositions of the present invention have been designed to ensure the healthy establishment of cognitive function.

**Summary of the Invention**

The present invention concerns synthetic nutritional formulations for infants and young children, meaning in the context of the invention, up to the age of 36 months. The compositions are especially adapted to the gender of the child. The invention further relates to administration of these compositions for promoting the healthy establishment of cognitive function in infant boys and girls or in young boys and girls.

In a first aspect of the invention, there is provided a synthetic nutritional composition especially adapted to the nutritional needs of a male infant or young child. The composition comprises:

> a. 600-810 mg/100ml linoleic acid,
> b. 42-52 mg/100ml α-linolenic acid and

c. 720-925 mg/100ml total polyunsaturated fatty acids

and wherein the quantities of all nutrients reflect the amount of nutrients present in the final liquid product to be consumed.

In a preferred embodiment, the composition may also comprise any one or a mixture of:

d. 0.18-0.50 mg/100ml of monosialoganglioside-3 (GM3),
e. 0.4-0.7 mg/100ml of GM3+ disialogangliosides 3 (GD3) and
f. 8.0-10.4 mg/100ml of sphingomyelin.

In another preferred embodiment, the composition may also comprise one or a mixture of phospholipids g.-j.:

g. 4.7-5.9 mg/100ml of phosphatidylcholine,
h. 6.3-10 mg/100ml of phosphatidylethanolamine,
i. 1-2 mg/100ml of phosphatidylinositol and
j. 0.7-1.1 mg/100ml of phosphatidylserine.

In another preferred embodiment, the composition additionally comprises:
k. 20 to 30 mg/100ml of phospholipids.

In another preferred embodiment, the composition is especially adapted to the nutritional needs of a male infant less than 3 months old. This composition comprises:

a. 600-740 mg/100ml linoleic acid,
b. 42-52 mg/100ml $\alpha$-linolenic acid and
c. 720-880 mg/100ml total polyunsaturated fatty acids.

The composition may additionally comprise any one or more of the components d.-k. indicated above.

In another preferred embodiment, the composition is especially adapted to the nutritional needs a male infant or child older than 3 months old and younger than 36 months. This composition comprises:

a. 660-810 mg/100ml linoleic acid,
b. 42-52 mg/100ml $\alpha$-linolenic acid and
c. 760-925 mg/100ml total polyunsaturated fatty acids.

The composition additionally comprises one or more of the following of components in the following quantities:

d. 0.35-0.50 GM3,
e. 0.4-0.7 mg/100ml of GM3+ GD3,
f. 8.5-10.4 mg/100ml sphingomyelin,
g. 4.7-5.9 mg/100ml phosphatidylcholine,
h. 8-9.8 mg/100ml of phosphatidylethanolamine,
i. 1.62-2 mg/100ml of phosphatidylinositol,
j. 0.7-1.1 mg/100ml of phosphatidylserine and
k. 24-30 mg/100ml total phospholipids.

In a second aspect of the invention, there is provided a synthetic nutritional composition especially adapted to the nutritional needs of a female infant or young child comprising:

a. 410-580 mg/100ml linoleic acid,
b. 26-30 mg/100ml $\alpha$-linolenic acid and
c. 510-680 mg/100ml total polyunsaturated fatty acids

wherein the quantities of all the nutrients reflect the amount of nutrients present in the final liquid product to be consumed.

In a preferred embodiment of this second aspect of the invention the synthetic nutritional composition also comprises any one or a mixture of:

d. 0.22-0.40 mg/100ml of GM3,
e. 0.4-0.6 mg/100ml of GM3+GD3 and
f. 7-9 mg/100ml of sphingomyelin.

In another preferred embodiment of this second aspect of the invention, the synthetic nutritional composition also comprises any one or a mixture of phospholipids g. -j.:

> g. 5-6.4 mg/100ml of phosphatidylcholine,
> h. 5.8-8 mg/100ml of phosphatidylethanolamine,
> i. 0.8-1.7 mg/100ml of phosphatidylinositol and
> j. 0.5-1 mg/100ml of phosphatidylserine.

In another preferred embodiment of the second aspect of the invention, the synthetic nutritional composition also comprises:
k. 19.5 to 25 mg/100ml of phospholipids.
In another preferred embodiment, the composition is especially adapted to the nutritional needs of a female infant younger than 3 months old. This composition is according to the second aspect of the invention, and comprises:

> a. 410-510 mg/100ml linoleic acid,
> b. 26-30 mg/100ml $\alpha$-linolenic acid and
> c. 510-60 mg/100ml total polyunsaturated fatty acids.

In another preferred embodiment, the composition for females is especially adapted to the nutritional needs of a female infant or child older than 3 months old and younger than 36 months. This composition is according to the second aspect of the invention, and comprises:

> a. 470-580 mg/100ml linoleic acid,
> b. 26-30 mg/100ml $\alpha$-linolenic acid and
> c. 540-680 mg/100ml total polyunsaturated fatty acids.

The latter composition is especially adapted to the nutritional needs of a female infant or child older than 3 months old and younger than 36 months and may also comprise one or more of the following of components d to k.:

> d. 0.3-0.4 GM3,
> e. 0.4-0.6 mg/100ml of GM3+GD3,
> f. 7.1-8.7 mg/100ml sphingomyelin,
> g. 5.2-6.4 mg/100ml phosphatidylcholine,
> h. 6.4-8 mg/100ml of phosphatidylethanolamine,
> i. 1.35-1.7 mg/100ml of phosphatidylinositol,
> j. 0.5-1 mg/100ml of phosphatidylserine and
> k. 19.8-24.2 mg/100ml total phospholipids.

In a third aspect of the invention, there is provided a set of two synthetic nutritional compositions, wherein the first composition is especially adapted to the nutritional needs of a male infant or child, as described according to the first aspect of the invention. The second composition as described according to the second aspect of the invention is especially adapted to the nutritional needs of a female infant or child.
The compositions according to the invention are especially adapted to promote the healthy establishment of cognitive function in infants and young children. According to this description, the compositions according to the first aspect of the invention and the first composition in the sets of nutritional compositions according to the third aspect of the invention are targeted to promote the healthy establishment of cognitive function in male children. According to this description, the compositions according to the second aspect of the invention and the second composition in the sets of nutritional compositions according to the third aspect of the invention are targeted to promote the healthy establishment of cognitive function in female children.
According to this description, compositions specifically adapted to male infants that are less than 3 months old are targeted to promote the healthy establishment of cognitive function in these infants.
According to this description, compositions specifically adapted to male infants and young children that are more than 3 months old are targeted to promote the healthy establishment of cognitive function in these infants.
According to this description, compositions specifically adapted to female infants and that are less than 3 months old are targeted to promote the healthy establishment of cognitive function in these infants.
According to this description, compositions specifically adapted to female infants and young children and that are more than 3 months old are targeted to promote the healthy establishment of cognitive function in these infants.
The synthetic nutritional compositions may be an infant formula in the form of a powder, liquid or concentrated liquid, or is a human milk fortifier, or a growing-up milk. In a preferred embodiment, the infant formula is a cow's milk whey-based formula.

## Brief Description of the Figures

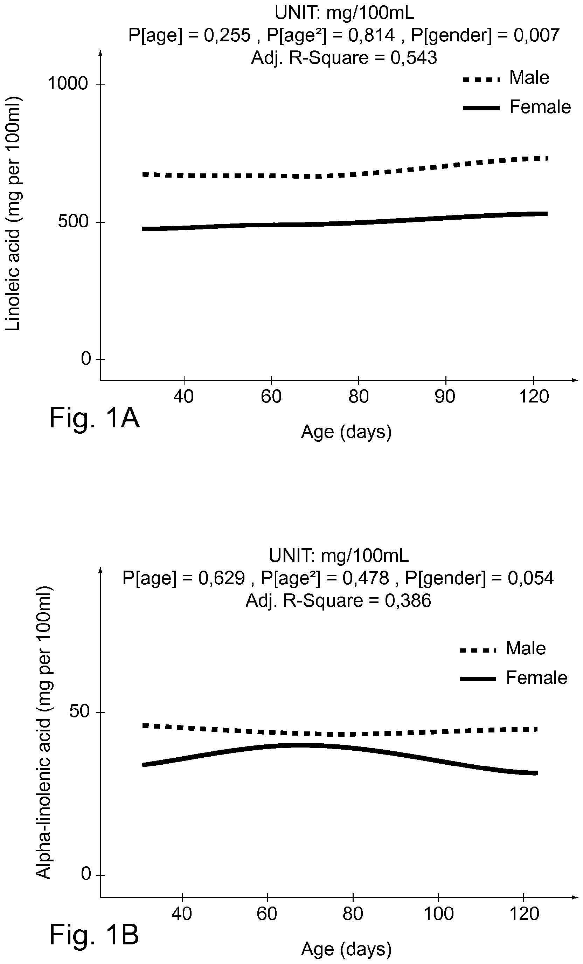

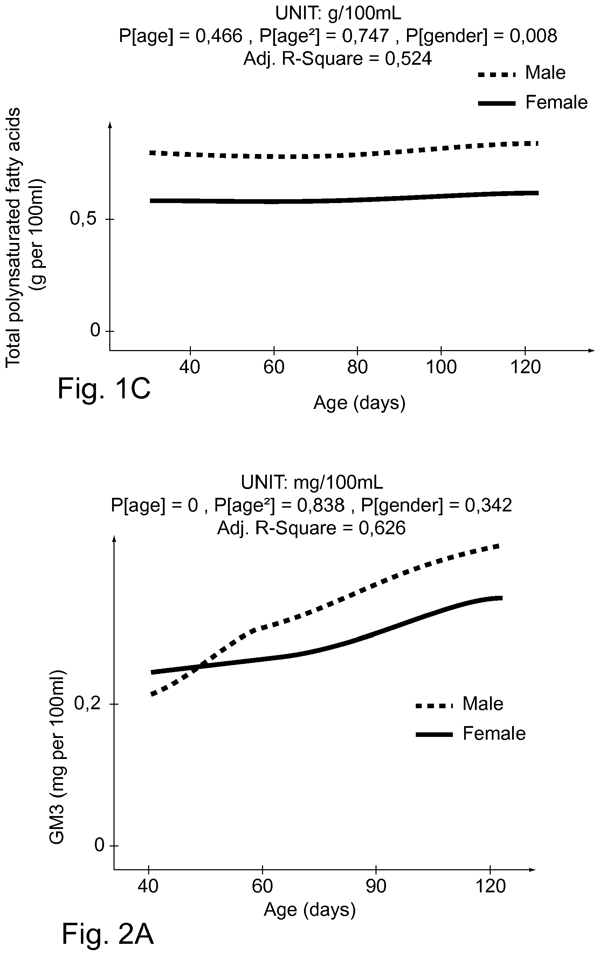

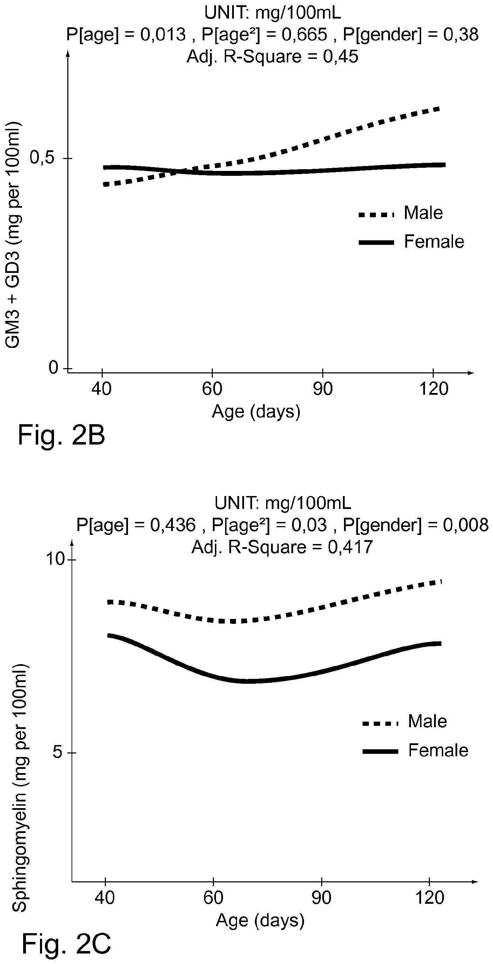

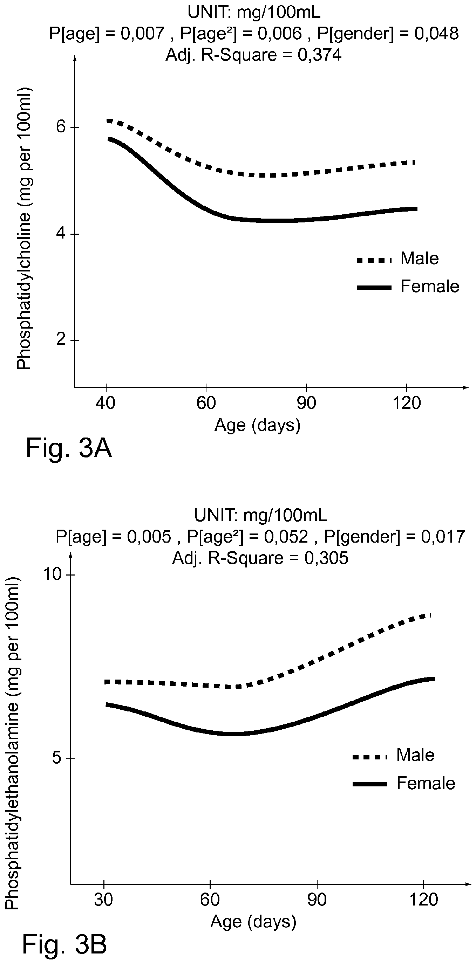

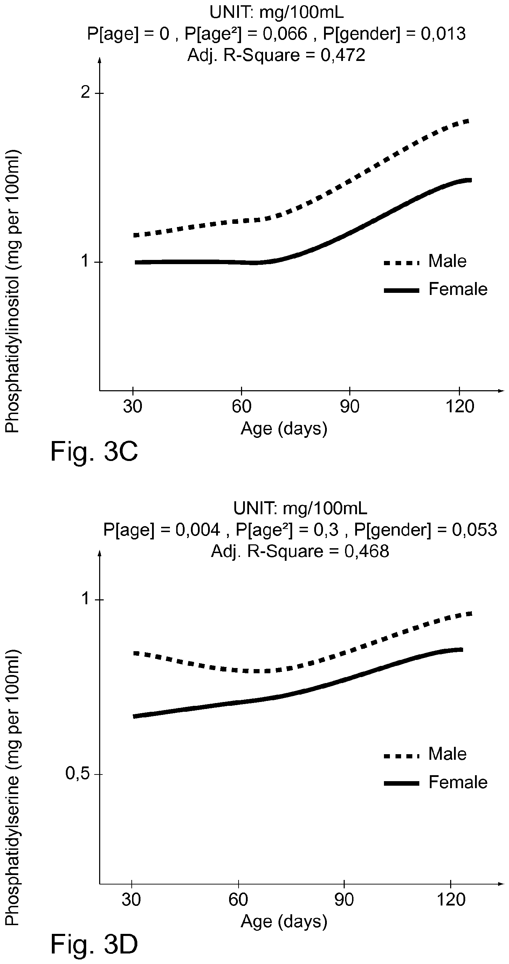

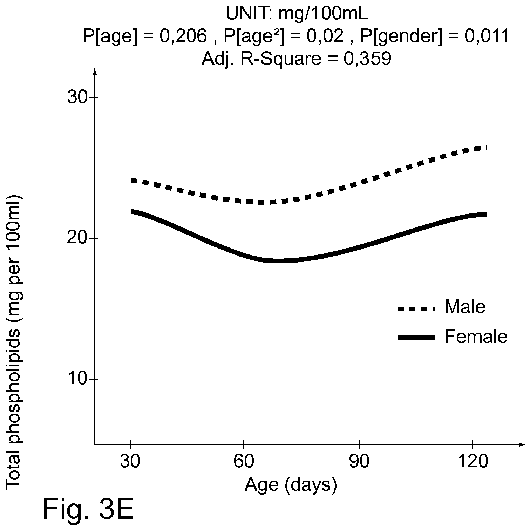

**Figures 1-3** show the results of the analysis of nutrients in the breast milk of 50 mothers in trial detailed in Example 1. Samples were taken at 30, 60 and 120 days post-partum. Quantities were measured in mg/100ml. The measurements of milk of mothers to boys are shown with a dashed line, while the solid line shows the measurements of milk of mothers to girls. The P[gender] value relates to the differences in milk with respect to the sex of the baby. The P[age] values are differences in gender with respect to time; P[age] is a P value considering a linear model and P[age$^2$] using a quadratic model. Figure 1A shows linoleic acid, Figure 1B shows alpha-linolenic acid, and Figure 1C total polyunsaturated fatty acids (PUFA). Figure 2A shows monosialoganglioside 3 (GM3), Figure 2B shows GM3 + disialogangliosides 3 (GD3), Figure 2C shows sphingomyelin (SM). Figure 3A shows phosphatidylcholine, Figure 3B shows phosphatidylethanolamine, Figure 3C shows phosphatidylinositol, Figure 3D shows phosphatidylserine and 3E shows total phospholipids.

## Detailed Description

For a complete understanding of the present invention and the advantages thereof, reference is made to the following detailed description of the invention.

The present invention is defined by the subject-matter of the claims.

In the present description, the following words are given a definition that should be taken into account when reading and interpreting the description, examples and claims.

Definitions:

Infants: according to the Commission Directive 2006/141/EC of 22 December 2006 on infant formulae and follow-on formulae, article 1.2 (a), the term "infants" means children under the age of 12 months.

Young Children: according to the Commission Directives 2006/141/EC of 22 December 2006 and/or 91/321/EEC of 14 May 1991 on infant formulae and follow-on formulae, article 1.2 (b), the term "young children" means children aged between one and three years.

Infant formulae: according to the Commission Directives 2006/141/EC of 22 December 2006 and/or 91/321/EEC of 14 May 1991 on infant formulae and follow-on formulae, article 1.2 (c), the term "infant formulae" means foodstuffs intended for particular nutritional use by infants during the first four to six months of life and satisfying by themselves the nutritional requirements of this category of persons. It has to be understood that infants can be fed solely with infant formulas, or that the infant formula can be used by the carer as a complement of human milk. It is synonymous to the widely used expression "starter formula".

Follow-on formulae: according to the Commission Directives 2006/141/EC of 22 December 2006 and/or 91/321/EEC of 14 May 1991 on infant formulae and follow-on formulae, article 1.2 (d), the term "follow-on formulae" means foodstuffs intended for particular nutritional use by infants aged over four months and constituting the principal liquid element in a progressively diversified diet of this category of persons.

Growing-up milk: milk-based nutritional composition especially adapted to a child of between one year and three years old.

Human Milk fortifier: Nutritional composition for infants or young children intended to be added to or diluted with human milk.

The term "hypoallergenic composition" means a composition which is unlikely to cause allergic reactions.

The term "sialylated oligosaccharide" means an oligosaccharide having a sialic acid residue.

The term "fucosylated oligosaccharide" means an oligosaccharide having a fucose residue.

The term "prebiotic" means non-digestible carbohydrates that beneficially affect the host by selectively stimulating the growth and/or the activity of healthy bacteria such as bifidobacteria in the colon of humans [Gibson GR, Roberfroid MB. Dietary modulation of the human colonic microbiota: introducing the concept of prebiotics. J Nutr. 1995;125:1401-12].

The term "probiotic" means microbial cell preparations or components of microbial cells with a beneficial effect on the health or well-being of the host. [Salminen S, Ouwehand A. Benno Y. et al. "Probiotics: how should they be defined" Trends Food Sci. Technol. 1999:10 107-10].

An "allergy" is an allergy which has been detected by a medical doctor and which can be treated occasionally or in a more durable manner. A "food allergy" is an allergy with respect to a nutritional composition.

All percentages are by weight unless otherwise stated.

As used in this specification, the words "comprises", "comprising", and similar words, are not to be interpreted in an exclusive or exhaustive sense. In other words, they are intended to mean "including, but not limited to".

Any reference to prior art documents in this specification is not to be considered an admission that such prior art is widely known or forms part of the common general knowledge in the field.

The present inventors have carried out a major study on breast milk composition. This study involved both developing advanced analytical technologies to analyze milk samples and performing a longitudinal clinical trial with human milk sampling at 30, 60 and 120 days post-partum (see **Example 1**). The milk samples were quantitatively analyzed for macronutrients, fatty acids, phospholipids and gangliosides. The inventors have surprisingly found very significant differences, between milk of mothers of male infants compared to that of female infants, not only in energy (differences are greater than previously reported), but also in the quantities of a number of fatty acids, phospholipids and gangliosides. In some cases, this difference between male and female destined milk varied over time (between 0-120 days).

The results of this trial indicated surprisingly significant differences in the levels of linoleic acid (LA), $\alpha$-linolenic acid (ALA), monosialoganglioside 3 (GM3), the sum of GM3 and disialogangliosides 3 (GD3), sphingomyelin, phosphatidylcholine, phosphatidylethanolamine, phosphatidylinositol, phosphatidylserine and total phospholipids for boys and girls (see **Table 2** and **Figures 1-3**).

Based upon the results of this study, the inventors have designed compositions that are especially adapted to meet the nutritional needs of male and female infant and young children. To the inventor's knowledge, to date, no gender specific formulations for infants or young children are known.

The compositions according to the invention:

The compositions of the invention are designed to meet the nutritional needs of male and female infants and young children. The compositions ensure development of optimal cognitive function in these infants or young children.

The synthetic nutritional compositions of the invention are designed for consumption by children from birth to three years old. They are specifically designed to be gender specific. In certain embodiments, they are also age specific, being designed for infants younger than three months old, or older than three months, but less than 36 months.

The synthetic nutritional compositions of the invention may be an infant formula in the form of a powder, liquid or concentrated liquid. The infant formula may be based on a cow's milk, goat's milk or buffalo milk. The infant formula may be a starter formula for infants that are less than six months old or a follow-on formula for infants that are more than 6 months old. The composition of the invention may be a growing up milk, or a human milk fortifier. In a preferred embodiment, the composition may be cow's milk whey based infant formula. The formula may also be a hypoallergenic (HA) formula in which the cow milk proteins are (partially or extensively) hydrolysed. The formula may also be based on soy milk or a non-allergenic formula, for example one based on free amino acids.

The nutritional compositions of the invention contain specific quantities of essential fatty acids, specifically linoleic acid (LA), $\alpha$-linolenic acid (ALA) and polyunsaturated fatty acids (PUFAs). The specific quantities of these nutrients are gender specific. In general, the compositions for males contain higher quantities of fatty acids compared to those for females. Quantities of the gangliosides monosialoganglioside-3 (GM3) as well as the sum of GM3 and disialogangliosides 3 (GD3) also vary depending on whether the composition is for a male or female. Quantities of sphingomyelin, phospholipids phosphatidylcholine, phosphatidylethanolamine, phosphatidylinositol and phosphatidylserine also vary for male and female destined compositions. The total number of phospholipids varies also. All of the latter components- essential fatty acids, sphingomyelin and phospholipids, are known to be involved in cognitive function development.

Thus, the composition according to one embodiment of the invention is especially adapted to the nutritional needs of a male infant or young boy (up to the age of 36 months), and comprises:

    a. 600-810 mg/100ml, preferably 670-730 mg/100ml linoleic acid (LA),
    b. 42-52 mg/100ml, preferably 45- 47mg/100ml $\alpha$-linolenic acid (ALA) and
    c. 720-925 mg/100ml, preferably 800-840 mg/100ml total polyunsaturated fatty acids (PUFA).

The quantities of all the nutrients expressed herein as mg/100ml or g/100ml reflect the amounts of nutrients present in the final liquid product, to be consumed by the infant or young child. For example, the composition may be a powdered infant formula that is diluted with water to give a final liquid product. The composition according to the invention may also be a concentrated liquid that is diluted with water to achieve the final liquid product. The composition of the invention may be a liquid product that is directly consumed by the infant or child as is. The composition according to the invention may be a human milk fortifier that is added to or diluted with human milk. In this case, the concentration of the nutrients already present in the human milk (to which the human milk fortifier is added) are to be taken as the average values for lactating mothers that are known or predicted from published clinical data.

In another embodiment, the composition also comprises any one or a mixture of:

d. 0.18-0.50 mg/100ml, preferably 0.22-0.43 mg/100 ml of GM3,

e. 0.4-0.7 mg/100ml, preferably 0.45-0.62 mg/100 ml of GM3+GD3 and

f. 8.0-10.4 mg/100ml, preferably 8.9-9.4 mg/100 ml of sphingomyelin.

In another embodiment, the composition may also comprise any one or a mixture of the phospholipids g.-j.:

g. 4.7-5.9 mg/100ml, preferably 5.3-6.1 mg/100 ml of phosphatidylcholine,

h. 6.3-10 mg/100ml, preferably 7.1-8.9 mg/100 ml of phosphatidylethanolamine,

i. 1-2 mg/100ml, preferably 1-1.2 mg/100 ml of phosphatidylinositol and

j. 0.7-1.1 mg/100ml, preferably 0.85-9.4 mg/100 ml of phosphatidylserine.

In another embodiment, the composition comprises:
k. 20 to 30 mg/100ml, preferably 24-26.3 mg/100 ml of phospholipids.

Thus, the composition comprises a, b and c. It may further comprise any one or a mixture of d to k. For example, the composition may comprise 700 mg/100ml LA, 46mg/100ml ALA, 840mg/100ml PUFA, 0.55 mg/100 ml GM3+GD3, and total phospholipids of 25mg/100ml.

For example, the composition may comprise 750 mg/100ml LA, 44mg/100ml ALA, 780mg/100ml PUFA, 0.30 mg/100 ml GM3, 5.8 mg/100 ml of phosphatidylcholine, 8.5 mg/100 ml of phosphatidylethanolamine, 1.1 mg/100 ml of phosphatidylinositol, 0.85 mg/100 ml of phosphatidylserine, 9.2 mg/100 ml of sphingomyelin and total phospholipids of 24mg/100ml.

For example, the composition may comprise 770 mg/100ml LA, 48mg/100ml ALA, 8800mg/100ml PUFA, 0.40 mg/100 ml GM3, 0.20 mg/100 ml GD3, 9.0 mg/100 ml of sphingomyelin and total phospholipids of 24mg/100ml.

Based on the results of the clinical trial, detailed in Example 1, the inventors have surprisingly discovered that the differences between certain nutrients in breast milk for boys and girls vary significantly with time.

Thus, in another embodiment, the composition for male infants or young children is especially adapted to the nutritional needs of a male infant of less than 3 months. This composition comprises:

a. 600-740 mg/100ml, preferably 660-680 mg/100 ml linoleic acid,

b. 42-52 mg/100ml, preferably 47-45 mg/100ml α-linolenic acid and

c. 720-880 mg/100ml, preferably 790-810 mg/100 ml total polyunsaturated fatty acids.

The compositions may also comprise any one or a mixture of components d. to k., as detailed above for a composition especially adapted for a male infant or young boy.

For example, the composition may comprise 680 mg/100ml LA, 48mg/100ml ALA, 800mg/100ml PUFA, 0.30 mg/100 ml GM3, 5.8 mg/100 ml of phosphatidylcholine, 8.5 mg/100 ml of phosphatidylethanolamine, 1.1 mg/100 ml of phosphatidylinositol, 0.78 mg/100 ml of phosphatidylserine, 9.2 mg/100 ml of sphingomyelin and total phospholipids of 24mg/100ml.

In another preferred embodiment, the composition for a male infant or young child is especially adapted to the nutritional needs a male infant or young child older than 3 months old and younger than 36 months.

This composition comprises:

a. 660-810 mg/100ml, preferably 720-740 mg/100 ml linoleic acid,

b. 42-52 mg/100ml, preferably 47-45 mg/100ml α-linolenic acid and

c. 760-925 mg/100ml, preferably 830-850 mg/100 ml total polyunsaturated fatty acids.

In addition, the composition may also specifically comprise one or more of the following of components in the following quantities:

d. 0.35-0.50 mg/ml, preferably 0.42-0.44 mg/100 ml GM3,

f. 8.5-10.4 mg/100ml, preferably 9.2-9.6 mg/100 ml sphingomyelin,

g. 4.7-5.9 mg/100ml, preferably 5.2-5.4 mg/100 ml phosphatidylcholine,

h. 8-9.8 mg/100ml, preferably 8.8-9.0 mg/100 ml of phosphatidylethanolamine,

i. 1.62-2 mg/100ml, preferably 1.7-1.9 mg/100 ml of phosphatidylinositol,

j. 0.7-1.1 mg/100ml, preferably 0.85-0.94 mg/100 ml of phosphatidylserine and

k. 24-30 mg/100ml, preferably 26-27 mg/100 ml total phospholipids.

For example, the composition may comprise 780 mg/100ml LA, 48mg/100ml ALA, 870mg/100ml PUFA, 0.43 mg/100 ml GM3, 5.6 mg/100 ml of phosphatidylcholine, 8.8 mg/100 ml of phosphatidylethanolamine, 1.8 mg/100 ml of phosphatidylinositol, 0.88 mg/100 ml of phosphatidylserine, 9.2 mg/100 ml of sphingomyelin and total phospholipids of 27mg/100ml.

Furthermore, the inventors have designed nutritional compositions specifically adapted to meet the nutritional needs of female infants and young girls (up to the age of 3 years old). These compositions are designed to promote the healthy establishment of cognitive function in female infants and young girls (up to the age of 3).

In an embodiment of the invention, these compositions comprise:

> a. 410-580 mg/100ml, preferably 460-525 mg/100 ml linoleic acid,
> b. 25-38 mg/100ml, preferably 30-33 mg/100 ml α-linolenic acid and
> c. 510-680 mg/100ml, preferably 570-610 mg/100 ml total polyunsaturated fatty acids.

In a further embodiment of the invention, the synthetic nutritional composition that is especially adapted to the nutritional needs of a female infant or young child comprises, in addition to a.-c., any one or a mixture of:

> d. 0.22-0.40 mg/100ml, preferably 0.25-0.35 mg/100 ml of GM3,
> e. 0.4-0.6 mg/100ml, preferably 0.48 mg/100 ml of GM3+GD3 and
> f. 7-9 mg/100ml, preferably 7.9-8.1 mg/100 ml of sphingomyelin.

In a further embodiment of the invention, the synthetic nutritional composition especially adapted for females also comprises any one or a mixture of phospholipids g.-j.:

> g. 5-6.4 mg/100ml, preferably 5.8 mg/100 ml of phosphatidylcholine,
> h. 5.8-8 mg/100ml, preferably 6.5-7.2 mg/100 ml of phosphatidylethanolamine,
> i. 0.8-1.7 mg/100ml, preferably 1-1.5 mg/100 ml of phosphatidylinositol,
> j. 0.5-1 mg/100ml, preferably 0.66-0.86 mg/100 ml of phosphatidylserine.

In a further embodiment of the invention, the synthetic nutritional composition especially adapted for females also comprises:
k. 19.5 to 25 mg/100ml, preferably 22 mg/100 ml of phospholipids.

In a preferred embodiment of the invention, the composition for females is especially adapted to the nutritional needs of a female infant younger than 3 months old. This composition comprises:

> a. 410-510 mg/100ml, preferably 450-470 mg/100 ml linoleic acid,
> b. 25-38 mg/100ml, preferably 30-33 mg/100 ml α-linolenic acid and
> c. 510-680 mg/100ml, preferably 560-580 mg/100 ml total polyunsaturated fatty acids.

The components d. to k. may be present in the quantities indicated above for the compositions for females.

In another preferred embodiment, the composition for females is especially adapted to the nutritional needs of a female infant or child older than 3 months old and younger than 36 months. This composition comprises:

> a. 470-580 mg/100ml, preferably 520-540 mg/100 ml linoleic acid,
> b. 25-38 mg/100ml, preferably 30-33 mg/100 ml α-linolenic acid and
> c. 540-680 mg/100ml, preferably 600-620 mg/100 ml total polyunsaturated fatty acids.

The latter composition may additionally comprise any one or more of the following components:

> d. 0.3-0.4 mg/100 ml, preferably 0.34-0.36 mg/100 ml GM3,
> e. 0.4-0.6 mg/100ml, preferably 0.48 mg/100 ml of GM3+GD3,
> f. 7.1-8.7 mg/100ml, preferably 7.8-8.0 mg/100 ml sphingomyelin,
> g. 5.2-6.4 mg/100ml, preferably 5.7-5.9 mg/100 ml phosphatidylcholine,
> h. 6.4-8 mg/100ml, preferably 7.1-7.3 mg/100 ml of phosphatidylethanolamine,
> i. 1.35-1.7 mg/100ml, preferably 1.4-1.6 mg/100 ml of phosphatidylinositol,
> j. 0.5-1 mg/100ml, preferably 0.66-0.86 mg/100 ml of phosphatidylserine and
> k. 19.8-24.2 mg/100ml, preferably 21-23 mg/100 ml total phospholipids.

For example, the composition may comprise 550 mg/100ml LA, 48mg/100ml ALA, 500mg/100ml PUFA, 0.35 mg/100 ml GM3, 5.6 mg/100 ml of phosphatidylcholine, 7 mg/100 ml of phosphatidylethanolamine, 1.5 mg/100 ml of phosphatidylinositol, 0.8 mg/100 ml of phosphatidylserine, 8.0 mg/100 ml of sphingomyelin and total phospholipids of 22mg/100ml.

In a third aspect of the invention, there is provided a set of at least two distinct synthetic nutritional compositions. Each set comprises a first composition and second composition. The first composition is any of the compositions described above that are especially adapted to the nutritional needs of a male infant or child. The second composition is any of the compositions described above that is especially adapted to the nutritional needs of a female infant or child.

The first and second compositions are distinct in that they differ by at least 10% in the quantity of at least one of the common components in the two compositions chosen among a. to k..

The first and second compositions are or can be conditioned separately. The first and second compositions in the set are commercialized under the same marketing concept umbrella. The first and second compositions may be then conditioned separately, or group together in another outer container, or packaging. The packaging may be for example simply a layer or plastic film, a bag, box, piece of foil, or other means to keep the first and second compositions grouped together.

The set of the invention can preferably be commercialized under the same marketing concept (for example gender segmentation and/or specific adaptation of nutritional compositions for male and female infants or children).

The set may comprise additional third, fourth and fifth etc. compositions that are especially adapted to meet the nutritional needs of infants or young children that are for example, 3-6 months old 6-9 months old or 9-12 months old. The set may also contain additional compositions that target in the same way children older than one year up to three years old.

Other ingredients in the compositions:

Other standard ingredients known to the skilled person for formulating an infant formula, human milk fortifier or growing-up milk may also be present in the compositions of the invention.

The synthetic nutritional composition of the invention for male and the synthetic nutritional composition of the invention for female may comprise same or similar ingredients, such as oligosaccharides, lipids, prebiotics or probiotics (for example as indicated below). Preferably however such ingredients may be different and particularly selected and adapted for the male and the female compositions. Preferably the dosage of each ingredient is adapted for the male and female compositions. Such adaptation preferably provides each of the male and female compositions the best adapted nutritional content for addressing specific needs or health conditions of males and females. Such health conditions can include the optimum growth, the optimum gut development, the optimal digestive function, the optimum immune functions or immune development, the optimum cognitive functions or development, or the optimum neurological development for the male and female infants.

The nutritional compositions of the invention may contain other ingredients which may act to enforce the technical effect of the components a.-k.

Prebiotics:

The prebiotics that may be used in accordance with the present invention are not particularly limited and include all food substances that promote the growth of probiotics or health beneficial micro-organisms in the intestines. Preferably, they may be selected from the group consisting of oligosaccharides, optionally containing fructose, galactose, mannose; dietary fibers, in particular soluble fibers, soy fibers; inulin; or mixtures thereof. Preferred prebiotics are fructo-oligosaccharides (FOS), galacto-oligosaccharides (GOS), isomalto-oligosaccharides (IMO), xylo-oligosaccharides (XOS), arabino-xylo oligosaccharides (AXOS), mannan-oligosaccharides (MOS), oligosaccharides of soy, glycosylsucrose (GS), lactosucrose (LS), lactulose (LA), palatinose-oligosaccharides (PAO), malto-oligosaccharides, gums and/or hydrolysates thereof, pectins and/or hydrolysates thereof.

In particular, the human milk oligosaccharides, for example sialylated oligosaccharides, described in WO 2012/069416 published on May 31, 2012 may be included in the composition according to the invention. The latter oligosaccharides may act in synergy with the essential fatty acids and phospholipids of the invention to promote the healthy establishment of cognitive function in the young developing infant or young child.

Probiotic may be added to the composition. All probiotic micro-organisms may be added additionally. Preferably, the probiotic may be selected for this purpose from the group consisting of *Bifidobacterium, Lactobacillus, Lactococcus, Enterococcus, Streptococcus, Kluyveromyces, Saccharoymces, Candida,* in particular selected from the group consisting of *Bifidobacterium longum, Bifidobacterium lactis, Bifidobacterium animalis, Bifidobacterium breve, Bifidobacterium infantis, Bifidobacterium adolescentis, Lactobacillus acidophilus, Lactobacillus casei, Lactobacillus paracasei, Lactobacillus salivarius, Lactobacillus lactis, Lactobacillus rhamnosus, Lactobacillus johnsonii, Lactobacillus plantarum, Lactobacillus salivarius, Lactococcus lactis, Enterococcus faecium, Saccharomyces cerevisiae, Saccharomyces boulardii* or mixtures thereof, preferably selected from the group consisting of *Bifidobacterium longum* NCC3001 (ATCC BAA-999), *Bifidobacterium longum* NCC2705 (CNCM I-2618), *Bifidobacterium longum* NCC490 (CNCM I-2170), *Bifidobacterium*

*lactis* NCC2818 (CNCM I-3446), *Bifidobacterium breve* strain A, *Lactobacillus paracasei* NCC2461 (CNCM I-2116), *Lactobacillus johnsonii* NCC533 (CNCM I-1225), *Lactobacillus rhamnosus GG* (ATCC53103), *Lactobacillus rhamnosus* NCC4007 (CGMCC 1.3724), *Enterococcus faecium SF 68* (NCC2768; NCIMB10415), and mixtures thereof.

In one embodiment the synthetic nutritional compositions of the invention comprise probiotics active or inactivated, dead or alive, preferably in sufficient dose to be effective (e.g between $10^6$ to $10^{11}$ or between $10^7$ and $10^9$ cfu /g of composition). In one embodiment the composition of the invention for male infant comprises a probiotic having a specific effect for male infant and is different from the probiotic comprised in the composition of the invention for female infant. In one embodiment such probiotics comprise *Bifidobacterium lactis or Lactobacillus rhamnosus GG* for male and B. Longum for female (or possibly vice-versa). In one embodiment such probiotics comprise Bifidobacterium Lactis for male and Lactobacillus Rhamnosus for female (or possibly vice-versa). The choice of probiotics is specifically adapted for the particular needs of male and female infants.

Generally it starts indeed to be recognized that male and female infants may have specific needs (qualitatively and quantitatively) in terms of lipids, oligosaccharides and probiotics. Vitamins, minerals and other micronutrients suitable for administration to children under the age of three may be added to the compositions of the invention.

The compositions described herein promote the healthy establishment of cognitive function: The nutrients of the compositions of the invention are especially associated with brain maturation, especially the development of cognitive function in young mammals.

ALA (α-linolenic acid), an omega-3 fatty acid, and LA (linoleic acid), an omega-6 fatty acid, cannot be synthesized by humans and thus must be obtained from the diet. Additionally, two long-chain omega-3 fatty acids, eicosapentaenoic acid (EPA) and docosahexaenoic acid (DHA), can be synthesized from ALA. There are many reports in the literature suggesting that these fatty acids may be essential for optimal cognitive function development. Among its many roles, DHA influences the function of the blood-brain barrier, the activity of membrane-bound enzymes and ionic channels, dopaminergic and serotoninergic neurotransmission, and signal transduction [Yaboob, P Annu. Rev. Nutr. 2009.29:257-282].

Ganglioside accretion in the developing brain is highest in utero and in early neonatal life, during the periods of dendritic branching and new synapse formation. Further, brain contains the highest relative ganglioside content in the body, particularly in neuronal cell membranes concentrated in the area of the synaptic membrane. Gangliosides are known to play a role in neuronal growth, migration and maturation, neuritogenesis, synaptogenesis, and myelination [McJarrow, P., (2009) Nutr. Rev. Aug; 67(8):451-63].

Choline found in phospholipids is the precursor to the neurotransmitter acetylcholine. Loss of cholinergic neurons is associated with impaired cognitive function [Poly et al. (2011) Am. J. Clin. Nutr., 94(6):1584-91].

Sphingomyelin is a type of sphingolipidfound in animal cell membranes, especially in the membranous myelin sheath that surrounds some nerve cell axons.

Thus, the compositions described herein are especially adapted to promote the healthy establishment of cognitive function in infants and young children. By "healthy establishment of cognitive function", it is meant that the cognitive function of the infant or young child, as measured by a standard method, is in the normal range.

Standard methods known to the skilled person are the Bayley Scales of Infant and Toddler Development® (currently Third Edition (Bayley-III)). This test includes cognitive, language, motor, social-emotional and general adaptive features. Raw scores of successfully completed items are converted to scale scores and to composite scores. These scores are used to determine the child's performance compared with norms taken from typically developing children of their age (in months). The percentile scores between 85 and 115 are usually accepted as normal cognitive development [Black M. M. and Matula K. (1999), Essentials of Bayley Scales of Infant Development II, Assessment, New York: John Wiley, ISBN 978-0-471-32651-9].

Another scale that may be used to measure cognitive function is the Griffiths Scale [Chaudhary T, et al. (2012), Predictive and Concurrent Validity of Standardized Neurodevelopmental Examinations by the Griffiths Scales and Bayley Scales of Infant Development II., Klin Pediatr., Dec. 2012].

According to a preferred embodiment of the invention, the compositions according to the first aspect of the invention and the first composition in the sets of nutritional compositions according to the third aspect of the invention, target male children. According to another preferred embodiment of the invention, the compositions according to the second aspect of the invention and the second composition in the sets of nutritional compositions according to the third aspect of the invention, target female children.

In one embodiment of the invention the synthetic nutritional composition of the invention is an infant formula intended and/or especially designed for preterm infants and/or caesarean-born infants. It is generally known, or at least hypothized, that these subject groups are more prone to suffer from unbalanced nervous system (including development thereof) and cognitive development due to the immaturity of their metabolic pathways and physiological conditions at birth. Early adaptation and control of the diet is therefore of the highest importance.

The synthetic nutritional composition of the invention is an infant formula (or a follow-on formula or a growing up milk or a human milk fortifier), for infants born from mothers an history of delivering premature infants or an history of malnutrition or an history of lower cognitive development. It is generally known, or at least hypothized, that these subjects groups are more prone to suffer from unbalanced nervous system (including development thereof) and cognitive development due to the immaturity of their metabolic pathways and physiological conditions at birth, due, for example, to the premature delivery or to genetic or epi-genetic predispositions. It is, therefore, critical to address such issues as early as possible during infancy by a specifically adapted diet.

The nutritional compositions are for infants that have experienced IUGR, and/or had a low, very low, or extremely low birth weight, is small for gestational age, and/or is suffering or suffered from cognitive function impairment either *in utero* or, during, or after birth.

## Examples:

### Example 1:

Longitudinal clinical trial:

The present inventors designed a longitudinal clinical trial with 50 lactating mothers with milk sampling at 30 (visit 1), 60 (visit 2) and 120 (visit 3) days post-partum. The milk samples were quantitatively analyzed for energy and total solids.

Human milk collection: The protocol and collection of human milk was reviewed and approved by the local ethical committee of Singapore. The study took place at National University of Singapore. Volunteer mothers of term infants, who were apparently healthy and non-smokers (n = 50; 31.1 $\pm$ 3.1-year old) provided breast milk samples (approximately 30 mL; 4 weeks post-partum). Samples were collected after full expression from one breast using milk pump and while the baby was fed on the other breast. All efforts were made to collect complete feed that included fore-milk, mid-milk and hind-milk as a representation of one feed and to avoid within feed variation of lipid content. Approximately 30 mL aliquot was separated in a conical polypropylene tube for this study and the rest was fed to the infant. Samples collected for research were stored at -80°C until analyses.

Macronutrient Analysis by Mid-Infrared (MIR) Assay: The MIR analyses were performed with the Human Milk Analyzer (HMA, Miris, Sweden). The HMA is based on a semisolid MIR transmission spectroscopy, designed specifically for determination of the macronutrient composition of human milk. The use of the machine was according to manufacturer's instructions. Briefly 1 mL of previously warmed sample (up to 40 °C in water bath) was sonicated for 1 min before manual injection to the milk inlet. The analysis was conducted within next minute before the milk was retrieved and the inlet washed with de-ionized water. The cell was also washed with supplied detergent every 5 sample injections. Also every 10 samples an in-house control as well as calibrating standard provided by Miris were ran for quality control purposes.

Fatty Acid Analysis: Fatty acid methyl esters (FAMEs) were prepared using HCI/Methanol (3N) as a catalyst. The methylation procedure was as follows: In a 15 mL test tube equipped with Teflon-lined screw caps, 250 $\mu$L of human milk was added followed by 300 $\mu$L of internal standard FAME 11:0 and 300 $\mu$L of internal standard TAG 13:0, 2 mL of methanol, 2 mL of methanol/HCL (3N) and 1 mL of n-hexane. Test tubes were firmly capped, shaken vigorously and heated at 100°C for 60 min, with occasional additional shaking. Care was taken to fit the cap tightly with cap liner to avoid leaks when tubes are heated at 100°C. After cooling down to room temperature, 2 mL water is added and shaken vigorously for centrifugation at 1200g for 5 min followed by the transfer of the upper phase (hexane) into GC vials. For optimal GLC separation, the use of a long (100 m), highly polar capillary column is recommended. These columns allow accurate separation of FAME, including the *cis* and *trans* isomers. GLC analyses were performed according to standard conditions known to the skilled person. A 7890A gas-chromatograph with a 7693 autosampler with preparative station module (Agilent Technologies, Palo Alto, CA) equipped with a fused-silica CP-Sil 88 capillary column (100% cyanopropylpolysiloxane; 100 m, 0.25 mm id, 0.25 $\mu$m film thickness; Agilent, Palo Alto, CA) was used with a split injector (1:25 ratio) heated at 250°C and a flame-ionization detector operated at 300 °C. The oven temperature programming used was 60°C isothermal for 5min, increased to 165 °C at 15 °C/min, isothermal for 1 min at this temperature, and then increased to 195 °C at 2 °C/min and held isothermal for 14 min and then increased to 215 °C at 5 °C/min and held isothermal for 8 min at 215 °C. Hydrogen was used as carrier gas under constant flow mode at 1.5 mL/min.

Phospholipid Analysis: Phospholipid families were separated by normal-phase high-performance liquid chromatography using 2 Nucleosil 50-5, 250 x 3mm, 5$\mu$ (Macherey-Nagel, Easton, USA) equipped with pre-column Nucleosil 50-5, 8 x 3mm, 5$\mu$ (Macherey-Nagel, Easton, USA). The chromatography system consisted of an Agilent 1200 module (Agilent Technologies, Basel, Switzerland) and an in-line PL-ELS 1000 evaporative light scattering detector (Polymer Laboratories, Shropshire England). All chromatography was performed at 55 °C. Solvent A was composed of ammonium formiate 3 g/L and solvent B of acetonitrile/methanol (100/3 v/v). Gradient conditions for phospholipid analysis were as follows: time= 0 min 1% solvent A; time=19 min 30% solvent A; time=21 min 30% solvent A; time=24 min 1% solvent A; flow rate was 1 mL/min. Data were collected and processed using Agilent Chem. Station software.

Ganglioside Analysis: Gangliosides were separated by LC using an Aquity BEH C18 column (1.7 $\mu$m; 150 x 2.1 mm i.d.; Waters). The chromatography system consisted of Infinity1290 modules (Agilent Technologies, Basel, Switzerland) coupled to triple quadrupole mass spectrometer (Applied biosystems/MSD Sciex, 5500 Ontario, Canada). All chromatography was performed at 50 °C. Solvent A composed of water/methanol/ammonium acetate (1mM) (90/10/0.1 v/v/v) and solvent B of methanol/ammonium acetate (1mM) (100/0.1 v/v). Gradient conditions were as follows: time= 0 min 10% solvent A; time=0.2 min 10% solvent A; time=8.2 min 5% solvent A; time=12.2 min 5% solvent A; time=12.4 min 0% solvent A; time=18.4 min 0% solvent A; time=18.6 10% solvent A; time=21 10% solvent A. Flow rate was 0.2 mL/min. The mass spectrometer was equipped with electrospray ionization (ESI) ion source. The ESI mass spectra were recorded in the negative ion mode under the following conditions: ion spray voltage (IS) -4000 V, temperature of the source 250ₒC, declustering potential (DP) -40V. Disialogangliosides 3 (GD3) and monosialogangliosides 3 (GM3), were monitored by transitions of the precursor ions to the m/z 290 product ion listed in the Table 1. The ion m/z 290 corresponds to Neu5Ac fragments obtained from B type of cleavage according to (13). Data were collected and processed using Multiquant software 2.1 (Applied Biosystems, Sciex, Ontario, Canada). Quantification was performed by calibration curve. Stock solutions of GD3 and GM3 were prepared in methanol 70% (1 mg/mL) and further dilutions to volume with methanol 70% were performed to give 6 concentration levels covering a range from 7.5 to 22.5 $\mu$g/mL. Total area of GD3 and GM3 was calculated as the sums of peak areas of the transitions of the precursor ions to the m/z 290 product ion.

Statistical analysis:

Data collection points are 1, 2 and 4 months after infants' birth. Table 2 shows the Min, Mean, SD and Max for each unit of measurement Statistical models fitted to the raw data are shown in Figures 1-3. Longitudinal analysis was carried out using linear mixed models. The figures also show the sequential effect of each of the terms age, age$^2$, gender and age-gender interactions in this particular order in terms of the P-value for the corresponding F-test. Thus, the P[age] is a P value considering a linear model and P[age$^2$] corresponds to a quadratic one. The appropriate model is chosen according to whether the trajectory is linear (P[age]) or curved (P[age$^2$]).

Adjusted R-squares were computed to obtain the degree of variability that is explained by the statistical models used.

Analysis was carried out using the following mixed-effects linear model:

$$\text{Conc:} = Age + Age^2 + Gender + Age \_ Gender + (Age^2) \_ Gender + Random\ Effects:$$

Random effects are subject specific terms to model the underlying correlation between repeat measures.

**Table 1.** Precursor ions for GD3 and GM3. The collision energy (CE) was set at -40V.

| Type of molecular ion | Predicted m/z | Observed m/z | Mass Error (ppm) | Assigned structure |
|---|---|---|---|---|
| [M-H]⁻ | 1125.6897 | 1125.6902 | 8.7 | GM3d32:0 |
| [M-H]⁻ | 1151.7053 | 1151.7059 | -5.1 | GM3d34:1 |
| [M-H]⁻ | 1149.6897 | 1149.6002 | 8.5 | GM3d34:2 |
| [M-H]⁻ | 1175.7053 | 1175.7059 | 5.0 | GM3d36:3 |
| [M-H]⁻ | 1173.6869 | 1173.6902 | 8.3 | GM3d36:4 |
| [M-H]⁻ | 1207.7679 | 1207.7685 | 1.3 | GM3d38:1 |
| [M-H]⁻ | 1235.7992 | 1235.7998 | 0.2 | GM3d40:1 |
| [M-H]⁻ | 1223.7992 | 1223.7998 | 0.2 | GM3d40:7 |
| [M-H]⁻ | 1263.8305 | na | - | GM3d42:1 |
| [M-H]⁻ | 1261.8149 | na | - | GM3d42:2 |
| [M-2H]²⁻ | 706.8808 | 706.8814 | -1.9 | GD3d32:1 |
| [M-2H]²⁻ | 721.9043 | 721.9048 | -6.7 | GD3d34:0 |
| [M-2H]²⁻ | 720.8965 | 720.8970 | 4.1 | GD3d34:1 |
| [M-2H]²⁻ | 719.8887 | 719.8892 | 0.2 | GD3d34:2 |
| [M-2H]²⁻ | 718.8808 | 718.8814 | -1.9 | GD3d34:3 |
| [M-2H]²⁻ | 728.9121 | 728.9127 | -3.7 | GD3d35:0 |
| [M-2H]²⁻ | 735.9195 | 735.9205 | 0.5 | GD3d36:0 |
| [M-2H]²⁻ | 733.9043 | 733.9048 | -6.6 | GD3d36:2 |
| [M-2H]²⁻ | 742.9278 | 742.9283 | 2.3 | GD3d37:0 |

(continued)

| Type of molecular ion | Predicted m/z | Observed m/z | Mass Error (ppm) | Assigned structure |
|---|---|---|---|---|
| $[M-2H]^{2-}$ | 741.9200 | 741.9205 | -0.7 | GD3d37:1 |
| $[M-2H]^{2-}$ | 749.9356 | 749.8984 | 2.1 | GD3d38:0 |
| $[M-2H]^{2-}$ | 747.9200 | 747.9205 | 0.7 | GD3d38:2 |
| $[M-2H]^{2-}$ | 746.9121 | 746.9127 | -3.6 | GD3d38:3 |
| $[M-2H]^{2-}$ | 745.9043 | 745.9048 | 6.5 | GD3d38:4 |
| $[M-2H]^{2-}$ | 744.8965 | 744.8970 | -9.4 | GD3d38:5 |
| $[M-2H]^{2-}$ | 743.8887 | 743.8892 | 1.1 | GD3d38:6 |
| $[M-2H]^{2-}$ | 763.9513 | 763.9528 | -2.3 | GD3d40:0 |
| $[M-2H]^{2-}$ | 762.9434 | 762.9440 | -5.2 | GD3d40:1 |
| $[M-2H]^{2-}$ | 777.9669 | 777.9674 | 3.3 | GD3d42:0 |
| $[M-2H]^{2-}$ | 775.9513 | 775.9048 | -6.2 | GD3d42:2 |

*nd: not detected*
*na: identification by high mass resolution mass spectrometer was not possible because outside the capability m/z range of the instrument.*

**Table 2 Longitudinal evolution of energy value and various lipids in human milk secreted for baby girls (N=25) and baby boys (N=25)**

| Nutrient | Visit | Milk secreted for baby girls | | | | Milk secreted for baby boys | | | | Combined | | | |
|---|---|---|---|---|---|---|---|---|---|---|---|---|---|
| | | Min | Mean | SD | max | Min | Mean | SD | max | Min | Mean | SD | max |
| Linoleic acid (mg per 100 mL) | V1 | 39.67 | 461.57 | 191.76 | 848.29 | 27.01 | 670.57 | 256.17 | 1294.82 | 27.01 | 566.07 | 247.58 | 1294.82 |
| | V2 | 65.55 | 508.30 | 274.10 | 1344.37 | 179.15 | 670.45 | 336.10 | 1343.89 | 65.55 | 589.37 | 314.38 | 1344.37 |
| | V3 | 16.79 | 526.20 | 418.80 | 1864.30 | 236.95 | 730.90 | 422.92 | 1844.22 | 16.79 | 628.55 | 429.02 | 1864.30 |
| α-Linolenic acid (mg per 100 mL) | V1 | 5.16 | 32.96 | 21.61 | 89.74 | 17.92 | 47.12 | 22.28 | 109.00 | 5.16 | 40.04 | 22.87 | 109.00 |
| | V2 | 2.56 | 40.76 | 29.44 | 124.72 | 7.45 | 41.90 | 29.91 | 154.67 | 2.46 | 41.33 | 29.38 | 154.67 |
| | V3 | 0.72 | 30.80 | 25.55 | 125.93 | 11.21 | 45.29 | 26.12 | 123.80 | 0.72 | 38.05 | 26.59 | 125.93 |
| Total PUFA Acids (g per 100 mL) | V1 | 0.12 | 0.57 | 0.22 | 0.96 | 0.22 | 0.80 | 0.27 | 1.46 | 0.12 | 0.68 | 0.27 | 1.46 |
| | V2 | 0.08 | 0.60 | 0.32 | 1.57 | 0.22 | 0.78 | 0.38 | 1.57 | 0.08 | 0.69 | 0.36 | 1.57 |
| | V3 | 0.02 | 0.61 | 0.49 | 2.21 | 0.29 | 0.84 | 0.48 | 2.18 | 0.02 | 0.73 | 0.49 | 2.21 |
| GM3 (mg per 100 mL) | V1 | 0.08 | 0.25 | 0.09 | 0.45 | 0.11 | 0.22 | 0.07 | 0.41 | 0.08 | 0.23 | 0.08 | 0.45 |
| | V2 | 0.11 | 0.27 | 0.12 | 0.59 | 0.13 | 0.30 | 0.15 | 0.65 | 0.11 | 0.29 | 0.14 | 0.65 |
| | V3 | 0.01 | 0.35 | 0.16 | 0.60 | 0.16 | 0.43 | 0.20 | 0.89 | 0.01 | 0.39 | 0.18 | 0.89 |
| GM3+GD3 (mg per 100 mL) | V1 | 0.29 | 0.48 | 0.19 | 1.07 | 0.21 | 0.45 | 0.10 | 0.60 | 0.21 | 0.46 | 0.15 | 1.07 |
| | V2 | 0.18 | 0.47 | 0.27 | 1.37 | 0.17 | 0.48 | 0.19 | 0.90 | 0.17 | 0.47 | 0.23 | 1.37 |
| | V3 | 0.06 | 0.48 | 0.18 | 0.90 | 0.25 | 0.62 | 0.32 | 1.49 | 0.06 | 0.55 | 0.27 | 1.49 |
| Sphingomyelin (mg per 100 mL) | V1 | 5.42 | 8.07 | 1.32 | 10.57 | 4.84 | 8.86 | 1.99 | 12.65 | 4.84 | 8.47 | 1.72 | 12.65 |
| | V2 | 2.45 | 6.93 | 2.42 | 13.74 | 3.38 | 8.49 | 3.37 | 17.74 | 2.45 | 7.71 | 3.01 | 17.74 |
| | V3 | 3.99 | 7.89 | 2.72 | 13.73 | 5.51 | 9.37 | 2.40 | 14.15 | 3.99 | 8.66 | 2.64 | 14.15 |
| Phosphatidy Icholine (mg per 100 mL) | V1 | 3.31 | 5.81 | 1.26 | 8.30 | 3.29 | 6.12 | 1.42 | 9.23 | 3.29 | 5.97 | 1.34 | 9.23 |
| | V2 | 1.62 | 4.43 | 1.89 | 8.70 | 1.96 | 5.25 | 2.17 | 11.92 | 1.62 | 4.84 | 2.06 | 11.92 |
| | V3 | 1.97 | 4.52 | 1.98 | 8.44 | 3.24 | 5.32 | 1.72 | 10.16 | 1.97 | 4.94 | 1.88 | 10.16 |

| Nutrient | Visit | Min | Mean | SD | max | Min | Mean | SD | max | Min | Mean | SD | max |
|---|---|---|---|---|---|---|---|---|---|---|---|---|---|
| Phosphatidylethanolamine (mg per 100 mL) | V1 | 3.15 | 6.47 | 1.62 | 9.04 | 3.19 | 7.05 | 2.06 | 11.12 | 3.15 | 6.76 | 1.86 | 11.12 |
|  | V2 | 2.35 | 5.70 | 2.30 | 11.15 | 2.37 | 7.02 | 3.68 | 18.25 | 2.35 | 6.36 | 3.11 | 18.25 |
|  | V3 | 2.67 | 7.24 | 3.23 | 14.71 | 5.26 | 8.85 | 2.81 | 15.38 | 2.67 | 8.08 | 3.10 | 15.38 |
| Phosphatidylinositol (mg per 100 mL) | V1 | 0.54 | 0.99 | 0.27 | 1.57 | 0.59 | 1.15 | 0.41 | 2.25 | 0.54 | 1.07 | 0.35 | 2.25 |
|  | V2 | 0.47 | 1.00 | 0.38 | 2.01 | 0.41 | 1.27 | 0.66 | 2.70 | 0.41 | 1.13 | 0.55 | 2.70 |
|  | V3 | 0.64 | 1.51 | 0.66 | 3.88 | 1.01 | 1.81 | 0.63 | 3.14 | 0.64 | 1.67 | 0.66 | 3.88 |
| Phosphatidylserine (mg per 100 mL) | V1 | 0.35 | 0.66 | 0.14 | 0.93 | 0.27 | 0.85 | 0.39 | 1.93 | 0.27 | 0.75 | 0.31 | 1.93 |
|  | V2 | 0.35 | 0.70 | 0.30 | 1.71 | 0.40 | 0.80 | 0.35 | 1.57 | 0.35 | 0.75 | 0.33 | 1.71 |
|  | V3 | 0.39 | 0.86 | 0.37 | 1.93 | 0.54 | 0.94 | 0.29 | 1.48 | 0.39 | 0.91 | 0.33 | 1.93 |
| Total phospholipid content (mg per 100 mL) | V1 | 14.16 | 22.01 | 1.41 | 28.59 | 12.54 | 24.03 | 5.42 | 33.77 | 12.54 | 23.02 | 4.88 | 33.77 |
|  | V2 | 7.64 | 18.73 | 6.67 | 31.93 | 8.61 | 22.83 | 9.76 | 51.67 | 7.64 | 20.78 | 8.53 | 51.67 |
|  | V3 | 9.72 | 22.02 | 8.63 | 41.88 | 15.66 | 26.29 | 7.44 | 42.95 | 9.72 | 24.24 | 8.23 | 42.95 |

**Example 2:**

An example of a starter infant formula for infant boys up to the age of three months is given below. The protein source is a conventional mix of whey protein and casein.

| Nutrient | per 100kcal | per litre |
|---|---|---|
| Energy (kcal) | 100 | 678 |
| Protein (g) | 1.68 | 11.3 |
| Fat (g) | 6.38 | 43.64 |
| Linoleic acid (g) | 0.98 | 6.7 |
| $\alpha$-Linolenic acid (mg) | 70 | 471 |
| Lactose (g) | 9.41 | 62.6 |
| Minerals (g) | 0.37 | 2.5 |
| Na (mg) | 23 | 150 |
| K (mg) | 89 | 590 |
| Cl (mg) | 64 | 430 |
| Ca (mg) | 62 | 410 |
| P (mg) | 31 | 210 |
| Mg (mg) | 7 | 50 |
| Mn ($\mu$g) | 8 | 50 |
| Se ($\mu$g) | 2 | 13 |
| Vitamin A ($\mu$g RE) | 105 | 700 |
| Vitamin D ($\mu$g) | 1.5 | 10 |
| Vitamin E (mg TE) | 0.8 | 5.4 |
| Vitamin K1 ($\mu$g) | 8 | 54 |
| Vitamin C (mg) | 10 | 67 |
| Vitamin B1 (mg) | 0.07 | 0.47 |
| Vitamin B2 (mg) | 0.15 | 1 |
| Niacin (mg) | 1 | 6.7 |
| Vitamin B6 (mg) | 0.075 | 0.5 |
| Folic acid ($\mu$g) | 9 | 60 |
| Pantothenic acid (mg) | 0.45 | 3 |
| Vitamin B12 ($\mu$g) | 0.3 | 2 |
| Biotin ($\mu$g) | 2.2 | 15 |
| Choline (mg) | 10 | 67 |
| Fe (mg) | 1.2 | 8 |
| I ($\mu$g) | 15 | 100 |
| Cu (mg) | 0.06 | 0.4 |
| Zn (mg) | 0.75 | 5 |
| GM3 (mg) | 0.32 | 2.2 |
| GD3 (mg) | 0.34 | 2.3 |

(continued)

| Nutrient | per 100kcal | per litre |
|---|---|---|
| Sphingomyelin (mg) | 13.16 | 88.6 |
| Phosphatidylcholine (mg) | 9.12 | 61.2 |
| Phosphatidylethanolamine (mg) | 10.51 | 70.5 |
| Phosphatidylinositol (mg) | 1.75 | 11.5 |
| Phosphatidylserine (mg) | 1.3 | 8.5 |

**Example 3:**

An example of a starter infant formula for infant boys older than three months is given below. The protein source is a conventional mix of whey protein and casein.

| Nutrient | per 100kcal | per litre |
|---|---|---|
| Energy (kcal) | 100 | 775.64 |
| Protein (g) | 1.18 | 8.48 |
| Fat (g) | 6.73 | 53.88 |
| Linoleic acid (g) | 0.92 | 7.31 |
| $\alpha$-Linolenic acid (mg) | 60 | 452.9 |
| Lactose (g) | 8.64 | 63.56 |
| Minerals (g) | 0.37 | 2.5 |
| Na (mg) | 23 | 150 |
| K (mg) | 89 | 590 |
| Cl (mg) | 64 | 430 |
| Ca (mg) | 62 | 410 |
| P (mg) | 31 | 210 |
| Mg (mg) | 7 | 50 |
| Mn ($\mu$g) | 8 | 50 |
| Se ($\mu$g) | 2 | 13 |
| Vitamin A ($\mu$g RE) | 105 | 700 |
| Vitamin D ($\mu$g) | 1.5 | 10 |
| Vitamin E (mg TE) | 0.8 | 5.4 |
| Vitamin K1 ($\mu$g) | 8 | 54 |
| Vitamin C (mg) | 10 | 67 |
| Vitamin B1 (mg) | 0.07 | 0.47 |
| Vitamin B2 (mg) | 0.15 | 1 |
| Niacin (mg) | 1 | 6.7 |
| Vitamin B6 (mg) | 0.075 | 0.5 |
| Folic acid ($\mu$g) | 9 | 60 |
| Pantothenic acid (mg) | 0.45 | 3 |
| Vitamin B12 ($\mu$g) | 0.3 | 2 |

(continued)

| Nutrient | per 100kcal | per litre |
|---|---|---|
| Biotin ($\mu$g) | 2.2 | 15 |
| Choline (mg) | 10 | 67 |
| Fe (mg) | 1.2 | 8 |
| I ($\mu$g) | 15 | 100 |
| Cu (mg) | 0.06 | 0.4 |
| Zn (mg) | 0.75 | 5 |
| GM3 (mg) | 0.56 | 4.3 |
| GD3 (mg) | 0.3 | 2 |
| Sphingomyelin (mg) | | |
| Phosphatidylcholine (mg) | 7.07 | 53.2 |
| Phosphatidylethanolamine (mg) | 11.83 | 88.5 |
| Phosphatidylinositol (mg) | 2.4 | 18.1 |
| Phosphatidylserine (mg) | 1.28 | 9.4 |

**Example 4:**

An example of a starter infant formula for infant girls up to three months is given below. The protein source is a conventional mix of whey protein and casein.

| Nutrient | per 100kcal | per litre |
|---|---|---|
| Energy (kcal) | 100 | 640.4 |
| Protein (g) | 1.66 | 10.72 |
| Fat (g) | 6.18 | 39.8 |
| Linoleic acid (g) | 0.72 | 4.62 |
| $\alpha$-Linolenic acid (mg) | 50 | 329.6 |
| Lactose (g) | 9.98 | 62.88 |
| Minerals (g) | 0.37 | 2.5 |
| Na (mg) | 23 | 150 |
| K (mg) | 89 | 590 |
| Cl (mg) | 64 | 430 |
| Ca (mg) | 62 | 410 |
| P (mg) | 31 | 210 |
| Mg (mg) | 7 | 50 |
| Mn ($\mu$g) | 8 | 50 |
| Se ($\mu$g) | 2 | 13 |
| Vitamin A ($\mu$g RE) | 105 | 700 |
| Vitamin D ($\mu$g) | 1.5 | 10 |
| Vitamin E (mg TE) | 0.8 | 5.4 |
| Vitamin K1 ($\mu$g) | 8 | 54 |

(continued)

| Nutrient | per 100kcal | per litre |
|---|---|---|
| Vitamin C (mg) | 10 | 67 |
| Vitamin B1 (mg) | 0.07 | 0.47 |
| Vitamin B2 (mg) | 0.15 | 1 |
| Niacin (mg) | 1 | 6.7 |
| Vitamin B6 (mg) | 0.075 | 0.5 |
| Folic acid (μg) | 9 | 60 |
| Pantothenic acid (mg) | 0.45 | 3 |
| Vitamin B12 (μg) | 0.3 | 2 |
| Biotin (μg) | 2.2 | 15 |
| Choline (mg) | 10 | 67 |
| Fe (mg) | 1.2 | 8 |
| I (μg) | 15 | 100 |
| Cu (mg) | 0.06 | 0.4 |
| Zn (mg) | 0.75 | 5 |
| GM3 (mg) | 0.38 | 2.5 |
| GD3 (mg) | 0.33 | 2.3 |
| Sphingomyelin (mg) | 12.71 | 80.7 |
| Phosphatidylcholine (mg) | 9.16 | 58.1 |
| Phosphatidylethanolamine (mg) | 10.16 | 64.7 |
| Phosphatidylinositol (mg) | 1.58 | 9.9 |
| Phosphatidylserine (mg) | 1.04 | 6.6 |

## Example 5:

An example of a starter infant formula for infant girls older than three months is given below. The protein source is a conventional mix of whey protein and casein.

| Nutrient | per 100kcal | per litre |
|---|---|---|
| Energy (kcal) | 100 | 626.17 |
| Protein (g) | 1.4 | 8.12 |
| Fat (g) | 5.87 | 38.75 |
| Linoleic acid (g) | 0.82 | 5.26 |
| α-Linolenic acid (mg) | 50 | 308 |
| Lactose (g) | 10.35 | 65.38 |
| Minerals (g) | 0.37 | 2.5 |
| Na (mg) | 23 | 150 |
| K (mg) | 89 | 590 |
| Cl (mg) | 64 | 430 |
| Ca (mg) | 62 | 410 |

(continued)

| Nutrient | per 100kcal | per litre |
|---|---|---|
| P (mg) | 31 | 210 |
| Mg (mg) | 7 | 50 |
| Mn ($\mu$g) | 8 | 50 |
| Se ($\mu$g) | 2 | 13 |
| Vitamin A ($\mu$g RE) | 105 | 700 |
| Vitamin D ($\mu$g) | 1.5 | 10 |
| Vitamin E (mg TE) | 0.8 | 5.4 |
| Vitamin K1 ($\mu$g) | 8 | 54 |
| Vitamin C (mg) | 10 | 67 |
| Vitamin B1 (mg) | 0.07 | 0.47 |
| Vitamin B2 (mg) | 0.15 | 1 |
| Niacin (mg) | 1 | 6.7 |
| Vitamin B6 (mg) | 0.075 | 0.5 |
| Folic acid ($\mu$g) | 9 | 60 |
| Pantothenic acid (mg) | 0.45 | 3 |
| Vitamin B12 ($\mu$g) | 0.3 | 2 |
| Biotin ($\mu$g) | 2.2 | 15 |
| Choline (mg) | 10 | 67 |
| Fe (mg) | 1.2 | 8 |
| I ($\mu$g) | 15 | 100 |
| Cu (mg) | 0.06 | 0.4 |
| Zn (mg) | 0.75 | 5 |
| GM3 (mg) | 0.56 | 3.5 |
| GD3 (mg) | 0.25 | 1.3 |
| Sphingomyelin (mg) | 11.92 | 78.9 |
| Phosphatidylcholine (mg) | 6.68 | 45.2 |
| Phosphatidylethanolamine (mg) | 10.68 | 72.4 |
| Phosphatidylinositol (mg) | 2.28 | 15.1 |
| Phosphatidylserine (mg) | 1.31 | 8.6 |

**Example 6:**

An example of the composition of a hypoallergenic (HA) starter infant formula for infant girls according to the present invention is given below. This composition is given by way of illustration only. The protein source is a conventional mix of whey protein and casein.

| Nutrient | per 100kcal | per litre |
|---|---|---|
| Energy (kcal) | 100 | 670 |
| Partially hydroylsed protein (g) | 1.83 | 12.3 |
| Fat (g) | 5.3 | 35.7 |

(continued)

| Nutrient | per 100kcal | per litre |
|---|---|---|
| Linoleic acid (g) | | 4.9 |
| $\alpha$-Linolenic acid (mg) | | 275 |
| Lactose (g) | 11.2 | 74.7 |
| Prebiotic (100% GOS) (g) | 0.64 | 4.3 |
| Minerals (g) | 0.37 | 2.5 |
| Na (mg) | 23 | 150 |
| K (mg) | 89 | 590 |
| Cl (mg) | 64 | 430 |
| Ca (mg) | 62 | 410 |
| P (mg) | 31 | 210 |
| Mg (mg) | 7 | 50 |
| Mn ($\mu$g) | 8 | 50 |
| Se ($\mu$g) | 2 | 13 |
| Vitamin A ($\mu$g RE) | 105 | 700 |
| Vitamin D ($\mu$g) | 1.5 | 10 |
| Vitamin E (mg TE) | 0.8 | 5.4 |
| Vitamin K1 ($\mu$g) | 8 | 54 |
| Vitamin C (mg) | 10 | 67 |
| Vitamin B1 (mg) | 0.07 | 0.47 |
| Vitamin B2 (mg) | 0.15 | 1.0 |
| Niacin (mg) | 1 | 6.7 |
| Vitamin B6 (mg) | 0.075 | 0.50 |
| Folic acid ($\mu$g) | 9 | 60 |
| Pantothenic acid (mg) | 0.45 | 3 |
| Vitamin B12 ($\mu$g) | 0.3 | 2 |
| Biotin ($\mu$g) | 2.2 | 15 |
| Choline (mg) | 10 | 67 |
| Fe (mg) | 1.2 | 8 |
| I ($\mu$g) | 15 | 100 |
| Cu (mg) | 0.06 | 0.4 |
| Zn (mg) | 0.75 | 5 |
| GM3 (mg) | | 3.1 |
| GD3 (mg) | | 1.9 |
| Sphingomyelin (mg) | | 88 |
| Phosphatidylcholine (mg) | | 57 |
| Phosphatidylethanolamine (mg) | | 69 |
| Phosphatidylinositol (mg) | | 12 |
| Phosphatidylserine (mg) | | 7.5 |

**Claims**

1. A synthetic nutritional composition for infants or young children comprising:

   a. 600-810 mg/100ml linoleic acid,
   b. 42-52 mg/100ml α-linolenic acid and
   c. 720-920 mg/100ml total polyunsaturated fatty acids,

   wherein the composition is especially adapted to the nutritional needs of a male infant or child, and
   wherein the quantities of all the nutrients reflect the amount of nutrients present in the final liquid product to be consumed.

2. The synthetic nutritional composition of claim 1, wherein the composition also comprises one or more of:

   d. 0.18-0.50 mg/100ml of GM3,
   e. 0.4-0.7 mg/100ml of GM3+GD3 and
   f. 8.0-10.4 mg/100ml of sphingomyelin.

3. The synthetic nutritional composition according to claim 1 or 2, wherein the composition also comprises one or a mixture of phospholipids g.-j.:

   g. 4.7-5.9 mg/100ml of phosphatidylcholine,
   h. 6.3-10 mg/100ml of phosphatidylethanolamine,
   i. 1-2 mg/100ml of phosphatidylinositol and
   j. 0.7-1.1 mg/100ml of phosphatidylserine.

4. The synthetic nutritional composition according to any one of claims 1 to 3, wherein the composition additionally comprises:
   k. 20 to 30 mg/100ml of phospholipids.

5. A synthetic nutritional composition for infants or young children comprising:

   a. 410-580 mg/100ml linoleic acid,
   b. 26-30 mg/100ml α-linolenic acid and
   c. 510-680 mg/100ml total polyunsaturated fatty acids.

   wherein the composition is especially adapted to the nutritional needs of a female infant or child, and
   wherein the quantities of all the nutrients reflect the amount of nutrients present in the final liquid product to be consumed.

6. The synthetic nutritional composition of claim 5, wherein the composition also comprises one or more of:

   d. 0.22-0.40 mg/100ml of GM3,
   e. 0.4-0.6 mg/100ml of GM3+GD3 and
   f. 7-9 mg/100ml of sphingomyelin.

7. The synthetic nutritional composition of any one of claim 5 or 6, wherein the composition also comprises any one or a mixture of phospholipids g. -j.:

   g. 5-6.4 mg/100ml of phosphatidylcholine,
   h. 5.8-8 mg/100ml of phosphatidylethanolamine,
   i. 0.8-1.7 mg/100ml of phosphatidylinositol and
   j. 0.5-1 mg/100ml of phosphatidylserine.

8. The synthetic nutritional composition according to any one of claims 5 to 7, wherein the composition comprises:
   k. 19.5 to 25 mg/100ml of phospholipids.

9. A set of synthetic nutritional compositions for infants or young children, wherein the first composition is according to any one of claims 1 to 4 and a second composition is according to any one of claims 5 to 8, wherein the first composition is especially adapted to the nutritional needs of a male infant or child and the second composition is especially adapted to the nutritional needs of a female infant or child.

**Patentansprüche**

1. Synthetische Nährstoffzusammensetzung für Säuglinge oder Kleinkinder, umfassend:

    a. 600 bis 810 mg/100 ml Linolsäure,
    b. 42 bis 52 mg/100 ml α-Linolensäure und
    c. 720 bis 920 mg/100 ml mehrfach ungesättigte Fettsäuren insgesamt,

    wobei die Zusammensetzung speziell an die Ernährungsbedürfnisse eines männlichen Säuglings oder Kindes angepasst ist, und
    wobei die Mengen aller Nährstoffe die Menge an Nährstoffen widerspiegeln, die in dem endgültigen, flüssigen, zu konsumierenden Produkt vorhanden sind.

2. Synthetische Nährstoffzusammensetzung nach Anspruch 1, wobei die Zusammensetzung auch eines oder mehrere der Folgenden umfasst:

    d. 0,18 bis 0,50 mg/100 ml GM3,
    e. 0,4 bis 0,7 mg/100 ml GM3+GD3 und
    f. 8,0 bis 10,4 mg/100 ml Sphingomyelin.

3. Synthetische Nährstoffzusammensetzung nach Anspruch 1 oder 2, wobei die Zusammensetzung auch eines oder eine Mischung von Phospholipiden g. bis j. umfasst:

    g. 4,7 bis 5,9 mg/100 ml Phosphatidylcholin,
    h. 6,3 bis 10 mg/100 ml Phosphatidylethanolamin,
    i. 1 bis 2 mg/100 ml Phosphatidylinositol und
    j. 0,7 bis 1,1 mg/100 ml Phosphatidylserin.

4. Synthetische Nährstoffzusammensetzung nach einem der Ansprüche 1 bis 3, wobei die Zusammensetzung zusätzlich Folgendes umfasst:
    k. 20 bis 30 mg/100 ml Phospholipide.

5. Synthetische Nährstoffzusammensetzung für Säuglinge oder Kleinkinder, umfassend:

    a. 410 bis 580 mg/100 ml Linolsäure,
    b. 26 bis 30 mg/100 ml α-Linolensäure und
    c. 510 bis 680 mg/100 ml mehrfach ungesättigte Fettsäuren insgesamt.

    wobei die Zusammensetzung speziell an die Ernährungsbedürfnisse eines weiblichen Säuglings oder Kindes angepasst ist, und
    wobei die Mengen aller Nährstoffe die Menge an Nährstoffen widerspiegeln, die in dem endgültigen, flüssigen, zu konsumierenden Produkt vorhanden sind.

6. Synthetische Nährstoffzusammensetzung nach Anspruch 5, wobei die Zusammensetzung auch eines oder mehrere der Folgenden umfasst:

    d. 0,22 bis 0,40 mg/100 ml GM3,
    e. 0,4 bis 0,6 mg/100 ml GM3+GD3 und
    f. 7 bis 9 mg/100 ml Sphingomyelin.

7. Synthetische Nährstoffzusammensetzung nach einem der Ansprüche 5 oder 6, wobei die Zusammensetzung auch eines oder eine Mischung von Phospholipiden g. bis j. umfasst:

g. 5 bis 6,4 mg/100 ml Phosphatidylcholin,
h. 5,8 bis 8 mg/100 ml Phosphatidylethanolamin,
i. 0,8 bis 1,7 mg/100 ml Phosphatidylinositol und
j. 0,5 bis 1 mg/100 ml Phosphatidylserin.

8. Synthetische Nährstoffzusammensetzung nach einem der Ansprüche 5 bis 7, wobei die Zusammensetzung Folgendes umfasst:
k. 19,5 bis 25 mg/100 ml Phospholipide.

9. Satz synthetischer Nährstoffzusammensetzungen für Säuglinge oder Kleinkinder, wobei die erste Zusammensetzung nach einem der Ansprüche 1 bis 4 ist und eine zweite Zusammensetzung nach einem der Ansprüche 5 bis 8 ist, wobei die erste Zusammensetzung speziell an die Ernährungsbedürfnisse eines männlichen Säuglings oder Kindes angepasst ist und die zweite Zusammensetzung speziell an die Ernährungsbedürfnisse eines weiblichen Säuglings oder Kindes angepasst ist.


**Revendications**

1. Composition nutritionnelle synthétique pour nourrissons ou jeunes enfants, comprenant :

   a. 600 à 810 mg/100 mL d'acide linoléique,
   b. 42 à 52 mg/100 mL d'acide $\alpha$-linolénique et
   c. 720 à 920 mg/100 mL d'acides gras polyinsaturés totaux,

   dans laquelle la composition est spécialement conçue pour les besoins nutritionnels d'un nourrisson ou enfant de sexe masculin, et
   dans laquelle les quantités de tous les nutriments reflètent la quantité de nutriments présents dans le produit liquide final destiné à être consommé.

2. Composition nutritionnelle synthétique selon la revendication 1, dans laquelle la composition comprend également un ou plusieurs parmi :

   d. 0,18 à 0,50 mg/100 mL de GM3,
   e. 0,4 à 0,7 mg/100 mL de GM3+GD3 et
   f. 8,0 à 10,4 mg/100 mL de sphingomyéline.

3. Composition nutritionnelle synthétique selon la revendication 1 ou 2, dans laquelle la composition comprend également un ou un mélange des phospholipides g. à j. :

   g. 4,7 à 5,9 mg/100 mL de phosphatidylcholine,
   h. 6,3 à 10 mg/100 mL de phosphatidyléthanolamine,
   i. 1 à 2 mg/100 mL de phosphatidylinositol et
   j. 0,7 à 1,1 mg/100 mL de phosphatidylsérine.

4. Composition nutritionnelle synthétique selon l'une quelconque des revendications 1 à 3, dans laquelle la composition comprend en outre :
   k. 20 à 30 mg/100 mL de phospholipides.

5. Composition nutritionnelle synthétique pour nourrissons ou jeunes enfants, comprenant :

   a. 410 à 580 mg/100 mL d'acide linoléique,
   b. 26 à 30 mg/100 mL d'acide $\alpha$-linolénique et
   c. 510 à 680 mg/100 mL d'acides gras polyinsaturés totaux.

   dans laquelle la composition est spécialement conçue pour les besoins nutritionnels d'un nourrisson ou enfant de sexe féminin, et
   dans laquelle les quantités de tous les nutriments reflètent la quantité de nutriments présents dans le produit liquide final destiné à être consommé.

**6.** Composition nutritionnelle synthétique selon la revendication 5, dans laquelle la composition comprend également un ou plusieurs parmi :

    d. 0,22 à 0,40 mg/100 mL de GM3,
    e. 0,4 à 0,6 mg/100 mL de GM3+GD3 et
    f. 7 à 9 mg/100 mL de sphingomyéline.

**7.** Composition nutritionnelle synthétique de l'une quelconque parmi la revendication 5 ou 6, dans laquelle la composition comprend également l'un quelconque ou un mélange des phospholipides g. à j. :

    g. 5 à 6,4 mg/100 mL de phosphatidylcholine,
    h. 5,8 à 8 mg/100 mL de phosphatidyléthanolamine,
    i. 0,8 à 1,7 mg/100 mL de phosphatidylinositol et
    j. 0,5 à 1 mg/100 mL de phosphatidylsérine.

**8.** Composition nutritionnelle synthétique selon l'une quelconque des revendications 5 à 7, dans laquelle la composition comprend :
k. 19,5 à 25 mg/100 mL de phospholipides.

**9.** Ensemble de compositions nutritionnelles synthétiques pour nourrissons ou jeunes enfants, dans lequel la première composition est selon l'une quelconque des revendications 1 à 4 et une deuxième composition est selon l'une quelconque des revendications 5 à 8, dans lequel la première composition est spécialement conçue pour les besoins nutritionnels d'un nourrisson ou enfant de sexe masculin et la deuxième composition est spécialement conçue pour les besoins nutritionnels d'un nourrisson ou enfant de sexe féminin.

UNIT: mg/100mL
P[age] = 0,255 , P[age²] = 0,814 , P[gender] = 0,007
Adj. R-Square = 0,543

- - - - ı Male
——— Female

Linoleic acid (mg per 100ml)

1000

500

0

40    60    80    90    120

Age (days)

Fig. 1A

UNIT: mg/100mL
P[age] = 0,629 , P[age²] = 0,478 , P[gender] = 0,054
Adj. R-Square = 0,386

- - - - ı Male
——— Female

Alpha-linolenic acid (mg per 100ml)

50

0

40    60    80    100    120

Age (days)

Fig. 1B

UNIT: g/100mL
P[age] = 0,466 , P[age²] = 0,747 , P[gender] = 0,008
Adj. R-Square = 0,524

- - - - Male
—— Female

Fig. 1C

UNIT: mg/100mL
P[age] = 0 , P[age²] = 0,838 , P[gender] = 0,342
Adj. R-Square = 0,626

- - - - Male
—— Female

Fig. 2A

UNIT: mg/100mL
P[age] = 0,013 , P[age²] = 0,665 , P[gender] = 0,38
Adj. R-Square = 0,45

Fig. 2B

UNIT: mg/100mL
P[age] = 0,436 , P[age²] = 0,03 , P[gender] = 0,008
Adj. R-Square = 0,417

Fig. 2C

UNIT: mg/100mL
P[age] = 0,007 , P[age²] = 0,006 , P[gender] = 0,048
Adj. R-Square = 0,374

Fig. 3A

UNIT: mg/100mL
P[age] = 0,005 , P[age²] = 0,052 , P[gender] = 0,017
Adj. R-Square = 0,305

Fig. 3B

UNIT: mg/100mL
P[age] = 0 , P[age²] = 0,066 , P[gender] = 0,013
Adj. R-Square = 0,472

Fig. 3C

UNIT: mg/100mL
P[age] = 0,004 , P[age²] = 0,3 , P[gender] = 0,053
Adj. R-Square = 0,468

Fig. 3D

UNIT: mg/100mL
P[age] = 0,206 , P[age²] = 0,02 , P[gender] = 0,011
Adj. R-Square = 0,359

Fig. 3E

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 017853082 A
- EP 2258216 A1
- EP 2258218 A1
- WO 2006041316 A
- US 20080003330 A1
- WO 2012069416 A

### Non-patent literature cited in the description

- **ALLEN, M.C.** Neurodevelopmental outcomes of preterm infants. *Curr. Opin Neurol.,* 2008, vol. 21 (2), 123-8
- **GREGORY, A. et al.** Intrauterine Growth Restriction Affects the Preterm Infant's Hippocampus. *Pediatric Research,* 2008, vol. 63 (4), 438-443
- **BARRETT, R.D. et al.** Destruction and reconstruction: hypoxia and the developing brain. *Birth Defects Res. C. Embryo Today,* 2007, vol. 81, 163-76
- **HUPPI, P.S.** *Nutrition for the Brain, Pediatric Research,* 2008, vol. 63 (3), 229-231
- **CHANG, C.Y. et al.** Essential fatty acids and human brain. *Acta Neurol. Taiwan,* 2009, vol. 18 (4), 231-41
- **ALESSANDRI, J.M. et al.** Polyunsaturated fatty acids in the central nervous system: evolution of concepts and nutritional implications throughout life. *Reprod. Nutr. Dev.,* 2004, vol. 44 (6), 509-38
- **HORTON, R.** *The Lancet,* 2008, vol. 371 (9608), 179
- **LAUS, M.F. et al.** Early postnatal protein-calorie malnutrition and cognition: a review of human and animal studies. *Int. J. Environ. Res. Public Health.,* 2011, vol. 8 (2), 590-612
- **POWE C.E. et al.** Infant sex predicts breast milk energy content. *American journal of human biology,* 2010, vol. 22, 50-54
- **JENSEN RG.** *Lipids in Human Milk, Lipids,* 1999, vol. 34, 1243-1271
- **SALA-VILA A. et al.** Lipid composition in human breast milk from Granada (Spain): Changes during lactation. *Nutrition,* 2005, vol. 21, 467-473
- **IMEN HADDAD et al.** *European Food Research and Technology,* 2012, vol. 235 (2), 325-332
- **GENZEL-BOROVICZNY et al.** *European Journal of Pediatrics,* 1997, vol. 156, 142-147
- **SALA-VILA et al.** *Nutrition,* 2005, vol. 21 (4), 467-473
- **GIBSON GR.** Roberfroid MB. Dietary modulation of the human colonic microbiota: introducing the concept of prebiotics. *J Nutr.,* 1995, vol. 125, 1401-12
- **SALMINEN S ; OUWEHAND A. BENNO Y. et al.** Probiotics: how should they be defined. *Trends Food Sci. Technol.,* 1999, vol. 10, 107-10
- **YABOOB, P.** *Annu. Rev. Nutr.,* 2009, vol. 29, 257-282
- **MCJARROW, P.** *Nutr. Rev. Aug,* 2009, vol. 67 (8), 451-63
- **POLY et al.** *Am. J. Clin. Nutr.,* 2011, vol. 94 (6), 1584-91
- **BLACK M. M. ; MATULA K.** Essentials of Bayley Scales of Infant Development II, Assessment. John Wiley, 1999
- **CHAUDHARY T et al.** Predictive and Concurrent Validity of Standardized Neurodevelopmental Examinations by the Griffiths Scales and Bayley Scales of Infant Development II. *Klin Pediatr.,* December 2012